(19) **Europäisches Patentamt / European Patent Office / Office européen des brevets**

(11) **EP 3 240 277 B1**

(12) **FASCICULE DE BREVET EUROPEEN**

(45) Date de publication et mention de la délivrance du brevet:
**15.01.2025 Bulletin 2025/03**

(21) Numéro de dépôt: **17168740.3**

(22) Date de dépôt: **28.04.2017**

(51) Classification Internationale des Brevets (IPC):
**H04M 19/08** *(2006.01)* **H04W 52/02** *(2009.01)*

(52) Classification Coopérative des Brevets (CPC):
**H04W 52/0261; H04M 19/08;** Y02D 30/70

(54) **PROCÉDÉ DE CONTRÔLE DES FLUX D'ÉNERGIE ÉLECTRIQUE AU SEIN D'UN SYSTÈME D'ACCÈS RADIO À UN RÉSEAU DE COMMUNICATION ET DISPOSITIF DE CONTRÔLE ASSOCIÉ**

KONTROLLVERFAHREN DER ELEKTRISCHEN ENERGIESTRÖME INNERHALB EINES FUNKZUGRIFFSSYSTEMS AUF EIN KOMMUNIKATIONSNETZ, UND ENTSPRECHENDE KONTROLLVORRICHTUNG

METHOD FOR CONTROLLING ELECTRICAL POWER FLOWS WITHIN A SYSTEM FOR WIRELESS ACCESS TO A COMMUNICATION NETWORK AND ASSOCIATED CONTROL DEVICE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **29.04.2016 FR 1653856**

(43) Date de publication de la demande:
**01.11.2017 Bulletin 2017/44**

(73) Titulaire: **Commissariat à l'Energie Atomique et aux Energies Alternatives**
**75015 Paris (FR)**

(72) Inventeurs:
• **MENDIL, Mouhcine**
**38000 Grenoble (FR)**
• **DE DOMENICO, Antonio**
**38000 Grenoble (FR)**
• **HEIRIES, Vincent**
**38430 Saint-Jean-de-Moirans (FR)**

(74) Mandataire: **Novaimo**
**Europa 1**
**362, avenue Marie Curie**
**Archamps Technopole**
**74166 Saint-Julien-en-Genevois Cedex (FR)**

(56) Documents cités:
WO-A1-2015/031581 WO-A1-2015/107299
WO-A1-2016/013089 US-A1- 2009 319 090
US-A1- 2017 186 108

**Description**

**Domaine technique de l'invention**

L'invention se situe dans le domaine de la gestion de l'énergie électrique au niveau d'un système d'accès radio à un réseau de communication. Elle concerne plus particulièrement un procédé de contrôle des flux d'énergie électrique au sein d'un système d'accès radio à un réseau de communication comportant un émetteur-récepteur radio, un dispositif de raccordement à un réseau électrique, un dispositif de production d'énergie électrique et une batterie de stockage d'énergie électrique produite par le dispositif de production et d'alimentation électrique de l'émetteur-récepteur radio.

**État de la technique**

Dans un contexte de réchauffement climatique, les opérateurs de télécommunications cherchent à réduire l'empreinte écologique des réseaux de télécommunication mobile. Parmi les différents composants d'un réseau de télécommunication mobile, le réseau d'accès radio, qui comporte des stations de base, est le plus grand consommateur d'énergie. Ces stations de base consomment en effet de 50% à 90% de l'énergie d'un réseau mobile.

Une solution connue pour réduire l'empreinte écologique d'un réseau de télécommunication mobile consiste à alimenter électriquement les stations de base du réseau, au moins partiellement, à partir d'une énergie verte ou renouvelable telle que l'énergie solaire ou l'énergie éolienne. A cet effet, le réseau d'accès radio intègre des panneaux photovoltaïques et/ou des éoliennes destinées à alimenter en énergie électrique les stations de base.

Les panneaux photovoltaïques et les éoliennes sont des sources de production d'énergie électrique intermittente car les énergies vertes ou renouvelables ne sont pas disponibles en permanence. Leur disponibilité est fortement variable dans le temps et non contrôlable. Afin d'atténuer le caractère intermittent d'une telle production d'énergie électrique, il est connu d'ajouter une batterie de stockage d'énergie électrique entre la source d'énergie électrique intermittente (panneau photovoltaïque ou éolienne) et la station de base. La batterie permet de stocker provisoirement l'énergie électrique produite par la source intermittente et de fournir cette énergie électrique de façon lissée à la station de base. En définitive, elle joue un rôle de tampon de stockage de l'énergie et d'alimentation.

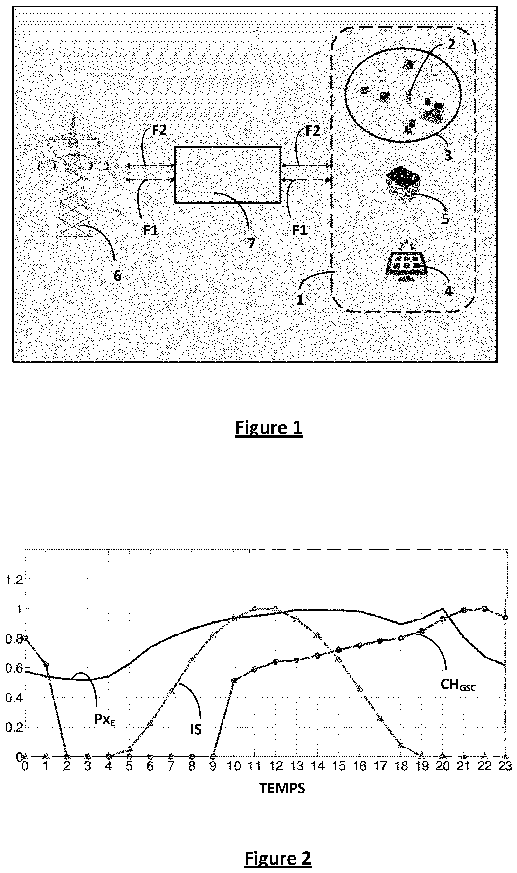

Sur la figure 1, on a représenté un système 1 comportant une station de base 2 couvrant une petite cellule 3, ou « small cell », un panneau photovoltaïque 4 et une batterie 5. Ce système 1 est appelé « Green Small Cell » ou « GSC » (c'est-à-dire « petite cellule verte »). Il est raccordé à un réseau électrique intelligent, ou « smart grid », 6 au moyen d'une connexion bidirectionnelle permettant un échange bidirectionnel d'énergie électrique entre le réseau électrique et le GSC 1. Ainsi, le système GSC 1 peut acheter ou vendre de l'énergie électrique au réseau 6. Un système de supervision énergétique 7, interposé entre le système GSC 1 et le réseau électrique 6, pilote les flux énergétiques (représentés par les flèches F1 sur la figure 1) entre le système GSC 1 et le réseau électrique 6, à partir de données et/ou informations provenant de ceux-ci (représentées par les flèches F2 sur la figure 1).

Le recours à une énergie verte pour alimenter les stations de base permet de réduire de façon significative les émissions de $CO_2$ du réseau d'accès mobile et donc de diminuer son empreinte carbone.

Les documents suivants concernent la gestion d'énergie pour des systèmes GSC semblables au système GSC 1 représenté sur la figure 1 :

[1] J. Leithon, S. Sun, and T. J. Lim, "Energy Management Strategies for Base Stations Powered by the Smart Grid," in IEEE GLOBECOM, 2013.

[2] D. Niyato, X. Lu, and P. Wang, "Adaptive Power Management for Wireless Base Stations in a Smart Grid Environment," IEEE Wireless Communications, vol. 19, no. 6, pp. 44-51, 2012.

[3] R. Kaewpuang, D. Niyato, and P. Wang, "Decomposition of Stochastic Power Management for Wireless Base Station in Smart Grid," IEEE Wireless Communications Letters, vol. 1, no. 2, pp. 97-100, 2012.

[4] J. Leithon, T. J. Lim, and S. Sun, "Online Energy Management Strategies for Base Stations Powered by the Smart Grid," in IEEE SmartGridComm, 2013, pp. 199-204.

Le but recherché dans ces différents documents est de minimiser les dépenses opérationnelles liées à la consommation d'énergie électrique de l'opérateur de télécommunications en élaborant une stratégie d'achat et de vente de l'électricité entre le système GSC et le réseau électrique intelligent, sur une durée déterminée. En tenant compte de la variation des prix d'achat et de vente de l'électricité dans le réseau électrique 6, de la consommation électrique de la station de base et de la production d'énergie électrique par le module photovoltaïque, une stratégie peut être définie, au niveau du système GSC, pour :

- consommer de l'énergie électrique provenant du réseau électrique quand le prix d'achat de l'électricité du réseau 6 est bas et

- fournir de l'énergie électrique produite en excédent par le module photovoltaïque 4 et momentanément stockée dans la batterie quand le prix de vente de l'électricité au réseau est élevé.

Les approches proposées dans les documents [1] à [4] permettent de piloter les échanges énergétiques entre le réseau électrique et la GSC dans le but de réduire les dépenses énergétiques. Ces approches mettent en œuvre un contrôle haut niveau des flux d'énergie globalement échangés entre le système comportant la station de base, la batterie et le module photovoltaïque, et le réseau électrique intelligent et nécessitent une connaissance préalable de l'évolution des variables aléatoires d'intérêt relatives à la production, à la consommation et au prix de l'énergie électrique. Elles reposent toutefois sur une connaissance approximative du prix variable de l'électricité, de la production photovoltaïque et de la consommation énergétique de la station de base, par exemple sur des profils moyens d'irradiation solaire « IS », de charge ou de consommation d'électricité par la GSC « $CH_{GSC}$ » et de prix de l'électricité « $Px_E$ », tels que représentés sur la figure 2 à titre d'exemple illustratif. Il en résulte des modèles qui sont soit très complexes, ce qui nécessite des mises à jour fréquentes et induit un coût de maintenance élevé, soit insuffisants pour relater de manière réaliste l'évolution de l'environnement, ce qui résulte en une perte de performance. En outre, ces méthodes de gestion de l'énergie visent uniquement à réduire la facture d'électricité de l'opérateur de télécommunications.

La présente invention vient améliorer la situation, en cherchant également à préserver la durée de vie de la batterie.

Le document US2009/319090A1 décrit un procédé permettant d'optimiser l'utilisation des énergies renouvelables et conventionnelles dans le cadre de la consommation énergétique d'un bâtiment afin d'obtenir un avantage visant à réduire les coûts ainsi que l'empreinte carbone liés à cette consommation. Le document WO2015/107299A1 décrit un procédé de gestion de l'état de charge d'une batterie susceptible d'être connectée à un réseau de distribution, le procédé visant à minimiser la dégradation calendaire ou le vieillissement d'une telle batterie et à éviter ainsi une dégradation de ses performances. Le document WO 2015/031581 décrit un procédé de calibrage et de distribution optimale de ressources énergétiques. Les documents WO 2016/013089 et US 2017/186108 décrivent un procédé et un dispositif de régulation offre-demande, qui est relié via un réseau de communication à des dispositifs de régulation charge-décharge qui régulent la charge et la décharge de dispositifs d'accumulateurs reliés à des lignes de distribution d'un système de distribution géré par une localité.

**Objet de l'invention**

A cet effet, l'invention concerne un procédé de gestion des flux d'énergie électrique au sein d'un système d'accès radio à un réseau de communication comportant un émetteur-récepteur radio, un dispositif de raccordement à un réseau électrique, un dispositif de production d'énergie électrique et une batterie de stockage d'énergie électrique produite par ledit dispositif de production et d'alimentation électrique de l'émetteur-récepteur radio, caractérisé en ce qu'un dispositif de contrôle détermine une stratégie de fonctionnement de la batterie par optimisation d'une fonction objectif qui associe un coût à une stratégie de fonctionnement possible de la batterie pendant une période de durée déterminée T et en respectant au moins une contrainte de protection de la batterie contre le vieillissement accéléré et pilote les flux d'énergie électrique entrants et sortants de la batterie en fonction de la stratégie de fonctionnement déterminée, et caractérisé en ce qu'une contrainte de protection de la batterie est de limiter la durée d'inutilisation de la batterie à une durée maximale prédéfinie, et en ce qu'on détermine la durée maximale d'inutilisation de la batterie en fonction de la température de la batterie et/ou de l'état de charge courant de la batterie.

Le procédé de l'invention permet à la fois de réaliser un objectif de réduction de coût, par exemple énergétique ou environnemental, lié au fonctionnement de l'émetteur-récepteur radio raccordé au réseau électrique et équipé d'une batterie et d'un dispositif de production d'énergie électrique (par exemple un dispositif photovoltaïque ou éolien), et de maximiser la durée de vie de la batterie.

La ou les contraintes de protection de la batterie contre le vieillissement peuvent être :

- d'imposer que l'état de charge de la batterie appartienne à une plage autorisée limitée par une borne inférieure comprise entre 10% et 30%, avantageusement entre 15% et 25%, et une borne supérieure comprise entre 75% et 95%, avantageusement entre 80% et 90% ;
- de fixer un taux maximal de charge ou de décharge de la batterie.

Le taux maximal de charge ou de décharge fixé peut être déterminé en fonction de la température de la batterie et/ou de l'état de charge courant de la batterie.

Dans un premier mode de réalisation, la fonction objectif est une fonction qui associe un prix de l'électricité du réseau électrique (prix d'achat par un consommateur d'électricité et/ou prix de vente par un producteur d'électricité) à une stratégie de fonctionnement possible de la batterie pendant la période de durée déterminée T en intégrant dans le temps, sur la durée déterminée T, le produit

- d'un prix de l'électricité du réseau électrique applicable pendant une durée élémentaire $\Delta_t$ et
- de la quantité d'énergie électrique fournie par le réseau électrique au système d'accès radio pendant ladite durée élémentaire $\Delta_t$,

et en ce que le dispositif de contrôle détermine, par optimisation de la fonction objectif, une stratégie de fonctionnement de la batterie qui minimise ledit prix de l'électricité pendant la durée déterminée T.

Avantageusement, la quantité d'énergie électrique fournie par le réseau électrique pendant une durée élémentaire $\Delta_t$ est déterminée par une opération mathématique

- d'addition d'une quantité d'énergie électrique consommée par l'émetteur-récepteur radio pendant la durée élémentaire $\Delta t$ et d'une quantité d'énergie électrique chargée dans la batterie pendant la durée élémentaire $\Delta_t$, dans le cas où ladite batterie est en charge durant la durée élémentaire $\Delta_t$, et
- de soustraction d'une quantité d'énergie électrique produite par le dispositif de production d'énergie pendant la durée élémentaire $\Delta_t$ et d'une quantité d'énergie électrique déchargée de la batterie dans le cas où ladite batterie est en décharge durant la durée élémentaire $\Delta_t$.

Avantageusement encore, la fonction objectif *O* est définie par l'équation :

$$O = \sum_{t=0}^{T} P_e(t) \cdot \left[ [P_{BS}(t) + P_{Bat}(SOC(t), SOC(t+1)) - P_{PV}(t)] \times \Delta_t \right],$$

où

- t et t+1 représentent deux instants successifs séparés par la durée élémentaire $\Delta_t$ ;
- $P_e(t)$ représente le prix d'achat par un consommateur de l'électricité fournie par le réseau électrique (6) au système d'accès radio (1) à l'instant t ou le prix de vente de l'électricité au réseau électrique par le système d'accès radio (1) ;
- $P_{PV}(t)$ représente la puissance électrique produite par le dispositif de production (4) à l'instant t ;
- $P_{BS}(t)$ représente la puissance électrique consommée par l'émetteur-récepteur (2) à l'instant t ;
- $P_{Bat}((SOC(t), SOC(t+1))$ représente la puissance électrique consommée, si elle est positive, ou produite, si elle est négative, par la batterie (5) à l'instant t ;
- $SOC(t)$ et $SOC(t+1)$ représentent les états de charge de la batterie (5) aux instants t et t+1 respectivement.

L'optimisation peut être basée sur des données d'évolution durant la période de durée déterminée T de variables d'état relatives à l'énergie électrique consommée par l'émetteur-récepteur radio, à l'état de charge de la batterie et au prix (de vente et/ou d'achat) de l'électricité du réseau électrique, qui est prédite à partir de données antérieures d'évolution desdites variables d'état durant une période passée. Elle peut utiliser une méthode de points intérieurs.

Dans un deuxième mode de réalisation, l'optimisation utilise une méthode stochastique mettant en œuvre un mécanisme d'apprentissage.

Dans une variante de réalisation, la fonction objectif associe un coût en empreinte carbone à une stratégie de fonctionnement possible de la batterie pendant une durée déterminée T du système d'accès radio et en ce que l'optimisation vise à minimiser ladite empreinte carbone sur la durée T.

L'invention concerne aussi un dispositif de contrôle pour un système d'accès radio à un réseau de communication comportant un émetteur-récepteur radio, un dispositif de raccordement à un réseau électrique, un dispositif de production d'énergie électrique et une batterie de stockage d'énergie électrique produite par ledit dispositif de production et d'alimentation électrique de l'émetteur-récepteur radio, caractérisé en ce qu'il comprend un module d'optimisation destiné à déterminer une stratégie de fonctionnement de la batterie par optimisation d'une fonction objectif qui associe un coût à une stratégie de fonctionnement possible de la batterie pendant une durée déterminée T tout en respectant au moins une contrainte de protection de la batterie contre le vieillissement et un module de pilotage de la batterie destiné à commander les flux d'énergie électrique entrants et sortants de la batterie en fonction de la stratégie de fonctionnement déterminée, et caractérisé en ce qu'une contrainte de protection de la batterie est de limiter la durée d'inutilisation de la batterie à une durée maximale prédéfinie, le dispositif de contrôle étant caractérisé en outre en ce qu'il détermine la durée maximale d'inutilisation de la batterie en fonction de la température de la batterie et/ou de l'état de charge courant de la batterie.

L'invention concerne également un système d'accès radio à un réseau de communication comportant un émetteur-récepteur radio, un dispositif de raccordement à un réseau électrique, un dispositif de production d'énergie électrique, une batterie de stockage d'énergie électrique produite par ledit dispositif de production et d'alimentation électrique de l'émetteur-récepteur radio et un dispositif de contrôle selon la revendication précédente.

## Description sommaire des dessins

L'invention sera mieux comprise à l'aide de la description suivante d'un mode de réalisation particulier d'un procédé et d'un système de gestion des flux d'énergie électrique au sein d'un système d'accès radio à un réseau de télécommunications selon l'invention, en référence aux dessins annexés sur lesquels :

- La figure 1 représente une architecture comportant un système GSC (de l'anglais « Green Small Cell ») raccordé à un réseau électrique et une entité de gestion de l'énergie, de l'art antérieur ;
- La figure 2 représente des profils normalisés d'évolution temporelle, sur une durée de 24 heures, du prix de vente de l'électricité du réseau électrique, de l'irradiation solaire et de la charge (ou consommation électrique) de la GSC ;
- La figure 3 représente une architecture comportant un système GSC (de l'anglais « Green Small Cell ») raccordé à un réseau électrique et une entité de gestion de l'énergie, selon une forme de réalisation particulière de l'invention ;
- La figure 4 représente un organigramme des étapes du procédé de gestion de l'invention selon un mode de réalisation particulier ;
- La figure 5 représente un schéma fonctionnel illustrant l'interaction entre le système d'accès radio, ou système GSC, raccordé au réseau électrique (appartenant à l'ensemble « Environnement ») et le dispositif de contrôle (« Agent »).

## Description détaillée de modes de réalisation particuliers de l'invention

D'emblée, on notera que, sur les différentes figures, les éléments identiques, analogues ou correspondants portent les mêmes références, sauf indication spécifique contraire.

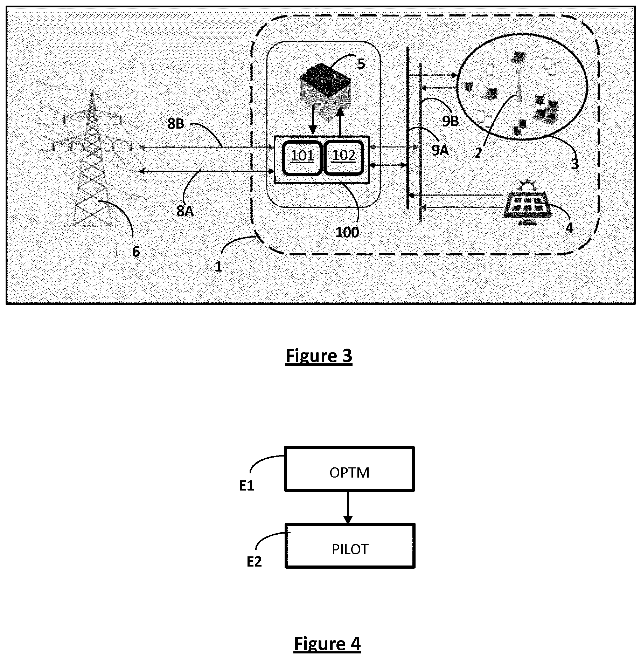

Sur la figure 3, on a représenté un système d'accès radio 1 à un réseau de communication, raccordé à un réseau électrique intelligent 6. Par exemple, le système d'accès radio 1 appartient à la partie accès radio ou « RAN » (de l'anglais « Radio Access Network ») d'un réseau de téléphonie mobile. Toutefois, l'invention s'applique à la partie accès radio de tout autre réseau de communication.

Le système d'accès radio 1, également appelé système GSC (de l'anglais « Green Small Cell » - petite cellule verte), comprend :

- un émetteur-récepteur radio 2, ou antenne-relais, ici une station de base, couvrant une cellule 3,
- un dispositif de production d'énergie électrique 4, en l'espèce un dispositif photovoltaïque,
- une batterie de stockage d'énergie électrique 5,
- un dispositif de contrôle 100.

Le dispositif 4 est destiné à produire localement de l'énergie électrique à partir d'une énergie verte, ici l'énergie solaire. Le dispositif 4 pourrait utiliser une autre énergie renouvelable, par exemple l'énergie éolienne, pour produire de l'électricité.

La batterie 5 est destinée d'une part à stocker de l'énergie électrique produite par le dispositif 4 et/ou issue du réseau électrique 6, et, d'autre part, à fournir de l'énergie électrique à l'émetteur-récepteur radio 2 et/ou au réseau électrique 6.

Le dispositif de contrôle 100 intègre un dispositif de raccordement au réseau électrique 6 (non représenté sur la figure 3) qui permet de raccorder le système d'accès radio 1 au réseau électrique 6 par l'intermédiaire :

- d'une liaison 8A de transport de flux d'énergie électrique entrant et sortant, permettant d'échanger de façon bidirectionnelle des flux d'énergie électrique entre le réseau électrique 6 et le système d'accès radio 1 ;
- d'une liaison 8B de transport de données permettant d'échanger des données et/ou informations entre le réseau électrique 6 et le système d'accès radio 1 de façon bidirectionnelle.

Le dispositif de contrôle 100 est également connecté à l'émetteur-récepteur radio 2 et au dispositif local de production d'énergie électrique 4, ici par l'intermédiaire d'un bus de puissance 9A et d'un bus de données 9B permettant respectivement la transmission de flux d'énergie électrique et la transmission de données entre ces différents éléments 100, 4 et 2. Sur la figure 3, les flèches reliant les éléments - dispositif de contrôle 100, station de base 2 et dispositif de production d'énergie électrique 4 - au bus de puissance 9A et au bus de données 9B indiquent les sens des flux correspondants de données et des flux correspondants d'énergie électrique.

En outre, le dispositif de contrôle 100 est directement connecté à la batterie 5 et destiné à piloter le fonctionnement de la batterie 5, autrement dit les flux d'énergie électrique entrants (ou de charge) et les flux d'énergie électrique sortants (ou de décharge) de la batterie 5. Il a pour rôle de commander directement la batterie 5.

En référence à la figure 3, on va maintenant décrire les différents flux d'énergie électrique susceptibles de circuler au sein du système d'accès radio 1 en fonctionnement.

Le dispositif de production locale 4 produit de l'énergie électrique de façon intermittente, ici en fonction de l'ensoleillement. Le flux d'énergie électrique ainsi produit localement par le dispositif 4 peut être fourni à la batterie 5 et stocké dans celle-ci au moins provisoirement.

En fonctionnement, l'émetteur-récepteur radio 2 consomme de l'énergie électrique. A cet effet, il reçoit un flux d'énergie électrique composé de l'un ou des deux flux suivants :

- un premier flux d'énergie électrique provenant du réseau électrique 6 ;
- un deuxième flux d'énergie électrique provenant de la batterie 5.

Le dispositif photovoltaïque 4 pourrait fournir directement un troisième flux d'énergie électrique à l'émetteur-récepteur radio 2 et/ou au réseau électrique 6.

En fonctionnement, la batterie 5 peut d'une part recevoir un flux d'énergie électrique entrant en provenance du dispositif photovoltaïque 4 et/ou du réseau électrique 6, et, d'autre part, fournir un flux d'énergie électrique sortant pour alimenter l'émetteur-récepteur radio 2 et/ou le réseau électrique 6.

Le dispositif de contrôle 100 est destiné à contrôler ou piloter les différents flux d'énergie électrique qui viennent d'être décrits au sein du système d'accès radio 1 par la mise en œuvre du procédé de contrôle ou de gestion des flux d'énergie électrique au sein d'un système d'accès radio 1 qui va maintenant être décrit en référence à la figure 4.

Le procédé de contrôle des flux d'énergie électrique au sein d'un système d'accès radio 1, mis en œuvre par le dispositif de contrôle 100, vise à piloter les flux d'énergie entre les entités suivantes : la station de base 2, le dispositif de production d'énergie électrique 4, la batterie 5 et le réseau électrique 6. Il repose sur un pilotage direct de la batterie 5 adapté pour optimiser à la fois une fonction objectif et l'espérance de vie de la batterie 5, comme cela sera explicité plus loin.

La stratégie de fonctionnement de la batterie 5 (c'est-à-dire la stratégie ou procédure ou méthode de charge et de décharge de la batterie 5) détermine la stratégie de pilotage des flux d'énergie électrique entre le réseau électrique 6 et le système d'accès radio 1 qui comprend le dispositif de production d'énergie électrique 4. En effet, le fait de commander uniquement la batterie 5 est suffisant pour définir les flux d'énergie électrique entre les composants au sein du système d'accès radio 1 et entre le réseau électrique 6 et le système d'accès radio 1. Cela résulte de l'équilibre énergétique au niveau du système d'accès radio 1 entre ce qui est « produit » - par le réseau électrique 6 et/ou par le dispositif de production locale 4 et/ou, le cas échéant, par la batterie 5 lorsque celle-ci est en décharge - et ce qui est consommé - par la station de base 2 et/ou par le réseau électrique 6 (de l'énergie électrique est vendue au réseau électrique 6) et, le cas échéant, par la batterie 5 lorsque celle-ci est en charge.

Le pilotage de la batterie 5 dépend d'une opération d'optimisation E1 consistant à optimiser une fonction objectif tout en respectant une ou plusieurs contraintes relatives à la batterie 5 destinées à protéger celles-ci contre un vieillissement trop rapide (c'est-à-dire prématuré ou accéléré).

En optimisation mathématique, une fonction objectif est une fonction qui sert de critère pour déterminer la meilleure solution à un problème d'optimisation. Elle associe une valeur à une instance d'un problème d'optimisation. Dans le contexte de l'invention, la fonction objectif associe un coût à une stratégie de fonctionnement (ou stratégie de charge et de décharge) de la batterie 5 pendant une durée déterminée T.

Par le terme « coût », on entend désigner une charge qui est liée au fonctionnement du système d'accès radio 1, ou système GSC, pendant la durée déterminée T. Ce coût peut être énergétique (économique) ou écologique (environnemental). Par exemple, la charge est soit le prix de l'électricité achetée au réseau électrique 6 par le système d'accès radio 1, soit l'empreinte carbone (c'est-à-dire la quantité de $CO_2$ émise) du système d'accès radio 1, induit(e) par une stratégie de fonctionnement de la batterie 5.

La stratégie de fonctionnement de la batterie 5 pendant une période déterminée T peut être définie, à chaque instant t de cette période T, par une puissance électrique $P_{batt}$ de la batterie 5. A un instant t, cette puissance électrique $P_{batt}$ est soit positive, lorsqu'elle correspond à une puissance électrique consommée par la batterie 5 (c'est-à-dire lorsque la batterie est en charge et reçoit un flux d'énergie électrique entrant), soit négative, lorsqu'elle correspond à une puissance électrique produite par la batterie 5 (c'est-à-dire lorsque la batterie est en décharge et fournit un flux d'énergie électrique sortant), soit nulle si la batterie est au repos. Le but de l'optimisation est de trouver une stratégie optimale de fonctionnement (c'est-à-dire de charge et de décharge) de la batterie 5 qui minimise le coût.

D'une manière générale, le dispositif de contrôle 100 interagit avec un environnement comprenant le système d'accès radio 1 et le réseau électrique intelligent 6, dont l'état à l'instant *t* peut être représenté par le vecteur d'état st. Ce vecteur d'état st regroupe des variables d'état correspondant à l'énergie consommée par la station de base 2, l'énergie produite par le dispositif photovoltaïque 4, l'état de charge SOC(t) de la batterie 5 et le prix de l'électricité $P_e(t)$. A chaque instant t, le dispositif de contrôle 100 sélectionne une action $a_t$ correspondant à une consigne de charge ou de décharge de la batterie 5. Le but est d'optimiser une fonction objectif *O* capable de déterminer sur le long terme un coût lié au fonctionnement du système d'accès radio 1 tout en maximisant la durée de la batterie 5.

L'ensemble des états de l'environnement perçu par le dispositif de contrôle 100 peut être décrit de la manière suivante :

$$S = B \times E \times R \times P$$

où

- *B, E, R* et *P* sont des ensembles composés d'éléments constitués par des scalaires, relatifs respectivement à la puissance électrique consommée par la station de base 2, à l'état de charge de la batterie 5, à la puissance électrique produite par le dispositif photovoltaïque 4 et au prix de l'électricité sur réseau électrique 6 ;

- S est l'ensemble constitué par le produit cartésien, ou la combinaison, des ensembles *B, E, R* et *P*, composé d'éléments constitués par des vecteurs de taille 4.

Etant donné un état initial **s** ∈ S, le problème d'optimisation à considérer pendant une durée de temps déterminée est le suivant :

$$Trouver\ \boldsymbol{\pi}^* = argmin_{\boldsymbol{\pi} \in S \times A}\ O^{\boldsymbol{\pi}}(s)$$

où *A* est l'ensemble des taux de charge (positif), des taux de décharge (négatif) et du taux repos (nul), de la batterie 5, $\pi$ est une stratégie possible pour la batterie 5 qui associe à chaque état de l'ensemble S un taux de charge ou de décharge ou de repos de l'ensemble A, c'est-à-dire une action de charge ou de décharge ou de repos de la batterie 5, et $O^{\pi}(s)$ représente la valeur de l'objectif global d'optimisation pour la stratégie $\pi$, en partant d'un état **s.**

Dans un premier exemple de réalisation, la fonction objectif *O* associe un prix de l'électricité sur le réseau électrique 6 à une stratégie $\pi$ de fonctionnement de la batterie 5 pendant une période ou durée déterminée T. Cette fonction objectif *O* peut être définie par l'équation (1) suivante :

$$O = \sum_{t=0}^{T} P_e(t) \cdot E_t(t, t+1) \qquad\qquad (1)$$

où

- *Et(t, t* + 1) représente la quantité d'énergie électrique fournie par le réseau électrique 6 au système d'accès radio 1 pendant une durée élémentaire $\Delta_t$, entre les instants « t » et « t+1 » (avec "*t* + 1" = *t* + $\Delta_t$), cette quantité d'énergie *Et(t, t* + 1) étant positive lorsque le système d'accès radio 1 consomme (ou achète) de l'énergie électrique sur le réseau 6, négative lorsque le système d'accès radio 1 fournit (ou vend) de l'énergie électrique sur le réseau 6, ou nulle lorsque le système d'accès radio 1 et le réseau électrique 6 n'échange pas d'énergie électrique ; et
- $P_e(t)$ représente le prix de l'électricité sur le réseau électrique, valable à l'instant t et applicable entre les instants t et t+1 - plus particulièrement $P_e(t)$ représente le prix d'achat par un consommateur au réseau électrique 6 si *Et(t, t* + 1) est positive (énergie électrique achetée sur le réseau 6), et le prix de vente de l'électricité au réseau électrique S lorsque *Et(t, t* + 1) est négative (énergie électrique vendue au réseau 6).

La durée élémentaire $\Delta_t$ est avantageusement adaptée à la vitesse d'évolution ou de variation de l'environnement, qui comprend notamment le prix de l'électricité, la production d'énergie électrique et la consommation d'énergie électrique. Par exemple, si le prix de l'électricité est susceptible de varier toutes les 30 minutes, la durée élémentaire $\Delta_t$ peut être fixée à 30 minutes.

Ainsi, la fonction objectif *O* telle que définie par l'équation (1) intègre dans le temps, sur la durée déterminée T, le produit

- d'un prix $P_e(t)$ de l'électricité du réseau électrique applicable pendant la durée élémentaire $\Delta_t$, et
- de la quantité d'énergie électrique *Et(t, t* + 1) fournie par le réseau électrique au système d'accès radio 1 pendant cette durée élémentaire $\Delta_t$.

Le bilan d'équilibre énergétique à un instant t au niveau du système d'accès radio 1 entre :

- la puissance électrique reçue ou produite, qui comprend

o la puissance électrique positive fournie par le réseau électrique 6 au système d'accès radio 1, c'est-à-dire la puissance électrique que le système d'accès radio 1 achète au réseau électrique 6 ;
o la puissance électrique $P_{PV}(t)$ produite par le dispositif de production 4 ; et
o le cas échéant, la puissance électrique fournie par la batterie 5 lorsque celle-ci est en décharge (c'est-à-dire produit un flux d'énergie électrique sortant)

- et la puissance électrique consommée, qui comprend

o la puissance électrique négative fournie par le réseau électrique 6 au système d'accès radio 1, c'est-à-dire la puissance électrique que le système d'accès radio vend au réseau électrique 6;
o la puissance électrique consommée par la station de base 2 ; et
o le cas échéant, la puissance électrique consommée par la batterie 5 lorsque celle-ci est en charge (c'est-à-dire reçoit un flux d'énergie électrique entrant)

peut se traduire par l'équation (2) suivante :

$$\frac{E_t(t, t+1)}{\Delta_t} + P_{PV}(t) = P_{BS}(t) + P_{Bat}\big((SOC(t), SOC(t+1)\big) \quad (2)$$

où

- $\frac{E_t(t,t+1)}{\Delta_t}$ représente la puissance électrique (positive, négative ou nulle comme précédemment expliqué) fournie par le réseau électrique 6 au système d'accès radio 1 à l'instant t ;
- $P_{PV}(t)$ représente la puissance électrique produite par le dispositif photovoltaïque 4 à l'instant t ;
- $P_{BS}(t)$ représente la puissance électrique consommée par la station de base 2 à l'instant t ;
- $P_{Batt}((SOC(t), SOC(t+1))$ représente la puissance électrique consommée (si elle est positive, la batterie 5 étant alors en charge) ou produite (si elle est négative, la batterie 5 étant alors en décharge) par la batterie 5 à l'instant t, cette puissance étant nulle lorsque la batterie est au repos ;
- $SOC(t)$ et $SOC(t+1)$ représentent les états de charge de la batterie 5 aux instants t et t+1 respectivement.

L'équation (3) suivante résulte de l'équation (2) :

$$E_t(t, t+1) = [P_{BS}(t) + P_{Bat}(SOC(t), SOC(t+1)) - P_{PV}(t)] \times \Delta_t \quad (3)$$

La quantité d'énergie électrique (positive, négative ou nulle) fournie par le réseau électrique 6 au système GSC 1 entre deux instants t et t+1 dépend donc de l'évolution de l'état de charge de la batterie entre ces deux instants t et t+1, autrement dit :

$$E_t(t, t+1) = E_t(SOC(t), SOC(t+1))$$

Il résulte du bilan d'équilibre énergétique au niveau du système d'accès radio 1, que la quantité d'énergie électrique (positive, négative ou nulle) fournie par le réseau électrique 6 pendant la durée élémentaire $\Delta_t$, notée $Et(t, t+1)$ ou $E_t(SOC(t), SOC(t+1))$, est déterminée par une opération mathématique

- d'addition d'une quantité d'énergie électrique consommée par l'émetteur-récepteur radio 2 pendant la durée élémentaire $\Delta_t$, notée $P_{BS}(t) \times \Delta_t$, et, dans le cas où la batterie 5 est en charge (c'est-à-dire reçoit un flux d'énergie électrique entrant en provenance du dispositif de production 4) durant la durée élémentaire $\Delta_t$, d'une quantité d'énergie électrique chargée dans la batterie 5 pendant la durée élémentaire $\Delta_t$ et faisant passer l'état de charge de la batterie 5 de SOC(t) à SOC(t+1), notée $P_{Bat}(SOC(t), SOC(t+1))$, et
- de soustraction d'une quantité d'énergie électrique produite par le dispositif de production d'énergie 4 pendant la durée élémentaire $\Delta_t$, notée $P_{PV}(t) \times \Delta_t$, et, dans le cas où la batterie 5 est en décharge durant la durée élémentaire $\Delta_t$ (c'est-à-dire délivre un flux d'énergie électrique sortant à la station de base 2), d'une quantité d'énergie électrique déchargée de la batterie 5 et faisant passer l'état de charge de la batterie 5 de SOC(t) à SOC(t+1), notée $|P_{Bat}(SOC(t), SOC(t+1))|$.

En tenant compte de l'égalité (3), la fonction objectif *O*, définie par l'équation (1), peut être formulée de façon équivalente par l'équation (4) suivante :

$$O = \sum_{t=0}^{T} P_e(t) \cdot \left[ \left[ P_{BS}(t) + P_{Bat}\big(SOC(t), SOC(t+1)\big) - P_{PV}(t) \right] \times \Delta_t \right] \quad (4)$$

Lors de l'opération d'optimisation E1, Le dispositif de contrôle 100 cherche à résoudre le problème d'optimisation consistant à minimiser la fonction objectif *O* en appliquant une stratégie π de charge et de décharge de la batterie 5 (ou stratégie de fonctionnement de la batterie 5) pendant une durée déterminée T. Autrement dit, il cherche à déterminer quelle stratégie π parmi l'ensemble des stratégies π possibles de charge et de décharge de la batterie 5 permet de minimiser la valeur de la fonction objectif *O* afin de déterminer ainsi *argminO{π}*. En définitive, l'optimisation permet de déterminer les états de charge *SOC(t)* de la batterie 5, à des instants successifs t, t+1, t+2,...., durant la période temporelle de durée T allant de t=0 à T, qui permettent de minimiser la fonction objectif *O* correspondant ici au prix de l'électricité sur la période T.

Selon l'invention, le dispositif de contrôle 100 chercher à résoudre le problème d'optimisation précédemment défini en satisfaisant au moins une contrainte de protection de la batterie contre le vieillissement accéléré.

Dans un premier mode de réalisation de l'invention, une contrainte de protection de la batterie est d'imposer que l'état de charge SOC(t) de la batterie 5 à chaque instant t appartienne à une plage de valeurs autorisées limitée par une borne inférieure comprise entre 10% et 30%, avantageusement entre 15% et 25%, et une borne supérieure comprise entre 75% et 95%, avantageusement entre 80% et 90%. Par exemple, la contrainte à respecter est que l'état de charge de la batterie soit compris entre 20% et 90%, autrement dit :

$$20\% \leq SOC(t) \leq 90\%.$$

Dans un deuxième mode de réalisation de l'invention, une contrainte de protection de la batterie est de fixer un taux de charge et/ou un taux de décharge maximal de la batterie 5. En d'autres termes, on fixe un courant maximal de charge et/ou un courant maximal de décharge de la batterie 5. Le taux maximal de charge et/ou de décharge fixé peut être déterminé en fonction de l'état de charge courant de la batterie et/ou de la température de la batterie.

Dans un troisième mode de réalisation de l'invention, une contrainte de protection de la batterie 5 est de limiter la durée d'inutilisation de la batterie 5 à une durée maximale prédéfinie. La durée maximale d'inutilisation de la batterie 5 peut être fixe. En variante, le dispositif de contrôle 100 détermine la durée maximale autorisée d'inutilisation de la batterie 5 en fonction de la température de la batterie et/ou de l'état de charge courant de la batterie, à partir de données de référence mémorisées. Cette contrainte vise à éviter que la batterie 5 ne reste inactive trop longtemps, ce qui aurait pour effet de la dégrader, en particulier si la température extérieure est élevée.

On pourrait envisager d'imposer d'autres contraintes destinées à protéger la batterie 5 contre le vieillissement accéléré, autrement dit à augmenter la durée de vie de la batterie 5.

Le dispositif de contrôle 100 peut réaliser l'opération d'optimisation E1 en respectant une ou plusieurs contraintes pour protéger la batterie contre le vieillissement.

Notons que si on fixe des contraintes portant sur des grandeurs de la batterie, telles que sa température, son état de charge, son taux de charge et/ou de décharge, ces grandeurs doivent figurer dans l'ensemble des états de l'environnement en tant que variables d'état de la batterie, pour la définition du problème d'optimisation.

Pour résoudre le problème d'optimisation précédemment défini, le dispositif de contrôle 100 peut utiliser toute méthode d'optimisation mathématique adaptée.

Dans un premier mode de réalisation, le dispositif de contrôle 100 détermine, ou prédit, l'évolution dans le temps - durant la période de durée déterminée T - des variables d'état $P_e(t)$, $P_{BS}(t)$, $P_{PV}(t)$ et *SOC(t)* contenues dans l'équation (4), sur la base de données antérieures d'évolution de ces variables d'état durant une période passée. Si la période T a une durée d'une journée, soit 24h, l'évolution des variables d'état durant une journée J peut être prédite à partir de l'évolution de ces variables d'état durant la journée précédente J-1. Par exemple, on considère que l'évolution des variables d'état $P_e(t)$, $P_{BS}(t)$, $P_{PV}(t)$ et *SOC(t)* durant une journée est identique à leur évolution lors de la journée précédente. Ainsi, on considère que l'évolution des variables $P_e(t)$, $P_{BS}(t)$, $P_{PV}(t)$ durant une journée est connue sur la base des données antérieures d'évolution de ces variables. Dans ce cas, le dispositif de contrôle 100 peut résoudre le problème d'optimisation en utilisant par exemple les méthodes d'optimisation de points intérieurs.

La stratégie optimale de charge et de décharge déterminée par optimisation E1 est ensuite utilisée par le dispositif de contrôle 100 pour piloter les flux d'énergie électrique entrant dans la batterie 5 et les flux d'énergie électrique sortant de la batterie 5, lors d'une étape E2 de pilotage de la batterie 5.

Dans un deuxième mode de réalisation, le dispositif de contrôle 100 utilise une méthode d'optimisation stochastique destinée à résoudre le problème d'optimisation sur la base d'un mécanisme ou processus d'apprentissage qui permet d'estimer l'évolution des variables d'état. L'optimisation stochastique présente l'avantage de ne nécessiter aucun modèle.

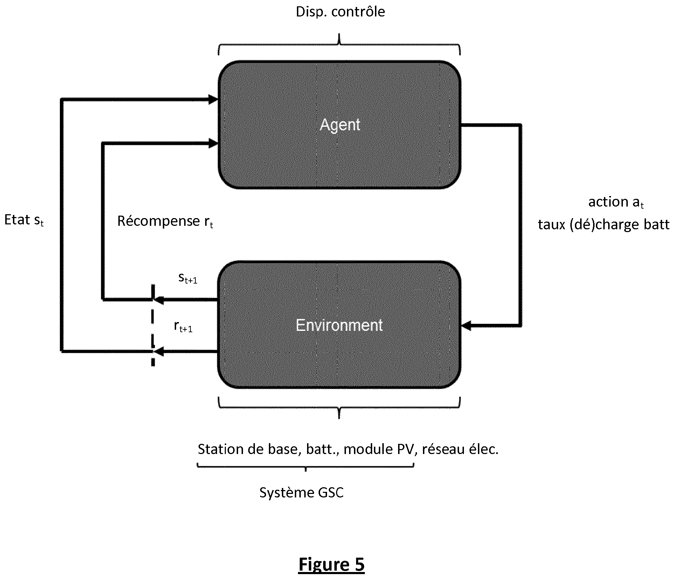

Sur la figure 5, on a représenté un schéma fonctionnel illustrant un exemple de mécanisme d'apprentissage pouvant être mis en œuvre pour optimiser le coût lié au fonctionnement du système d'accès radio 1 en respectant une ou plusieurs contraintes sur la batterie visant à protéger celle-ci du vieillissement.

En référence à la figure 5, un agent, constitué par le dispositif de contrôle 100, observe un état actuel $s_t$ à un instant courant t de l'environnement comportant la batterie 5, la station de base 2, le panneau photovoltaïque 4 et le prix de l'électricité et choisit en conséquence une action $a_t$. En réponse à l'action $a_t$ choisie, l'environnement évolue vers un nouvel état $s_{t+1}$ et donne lieu à une récompense $r_{t+1}$, ou une sanction, que l'agent cherche à maximiser, respectivement à minimiser, dans le temps. Le but de l'agent est donc d'optimiser une fonction objectif $O$ en exploitant les récompenses et/ou les sanctions obtenues pour évaluer la qualité des actions dans un état donné. La fonction objectif $O$ doit représenter, sur le long terme (typiquement sur une période de temps correspondant à la durée de vie théorique de la batterie), le coût lié au fonctionnement du système d'accès radio 1 tout en maximisant la durée de vie de la batterie 5.

On peut faire correspondre la fonction $O_\pi(s)$ à la somme des récompenses/sanctions accumulées au cours de l'application de la stratégie $\pi$ à partir de l'état $s$ sur le long terme. De ce fait, il est possible d'utiliser l'équation de Bellman comme suit:

$$\pi^* = argmin_{\pi \in S \times A}\, O^\pi(s) = argmin_{\pi \in S \times A} \sum_a \sum_{s'} P^a_{s,s'} \left( R^a_{s,s'} + O^\pi(s') \right)$$

où :

- $R^a_{s,s'}$ est le coût (récompense/sanction) associé à la sélection de l'action $a$ à l'état s puis l'accès à l'état s'

- $P^a_{s,s'}$ est la probabilité de transition de l'état s à l'état $s'$ en appliquant l'action $a$, qui dépend des aléas de l'environnement (production, consommation et prix de l'énergie) et n'est pas connu a priori ;

- $O^\pi(s')$ est la somme des récompenses / sanctions accumulées au cours de l'application de la stratégie $\pi$ à partir de l'état $s'$.

Un algorithme d'apprentissage, ou de Q-learning, permet de trouver la valeur optimale $O^*(s)$ et la stratégie associée en interagissant avec l'environnement, sans connaissance préalable de $P^a_{s,s'}$. Les seules conditions sont de définir correctement $R^a_{s,s'}$ et d'explorer suffisamment de possibilités (état - action) pour converger vers la solution optimale.

Par exemple, le coût (récompense/sanction) immédiat, c'est-à-dire résultant directement d'une action a pour passer de l'état s à l'état s', peut être formulé de la manière suivante :

$$R^a_{s,s'} = \left( E_{BS}(s) + E_{Bat}(a,s) - E_{PV}(s) \right) P_e(s) + \Gamma_{\text{bat}}(s,a,s')$$

où:

- $R^a_{s,s'}$ est le coût immédiat de la sélection d'une action $a$ à l'état s accédant à l'état $s'$,
- $E_{BS}$ est l'énergie consommée par la station de base 2,
- $E_{Bat}$ est l'énergie consommée (si elle est positive) ou produite (si elle est négative) par la batterie 5,
- $E_{PV}$ est l'énergie produite par le dispositif photovoltaïque 4,
- $P_e$ est le prix de l'électricité sur le réseau électrique 6 ;
- $\Gamma_{\text{bat}}$ est la contrainte de protection de la batterie 5 contre le vieillissement accéléré, permettant de prolonger la durée de vie de la batterie 5, cette contrainte augmentant au fur et à mesure qu'on s'éloigne d'un intervalle de fonctionnement recommandé.

Lors de l'apprentissage, le dispositif de contrôle 100 explore différentes stratégies selon l'algorithme de Q-learning jusqu'à trouver la stratégie optimale qui minimise le coût à long terme, c'est-à-dire sur une période de durée T. L'algorithme de Q-learning associe à chaque couple état-action une Q-valeur $Q(s, a)$ évaluant l'impact du choix d'une action $a$ à l'état s sur le coût long terme. En explorant différentes actions pour différents états, l'agent collecte les récompenses/sanctions qu'il utilise pour mettre à jour les Q-valeurs jusqu'à atteindre l'équilibre (plus aucune Q-valeur n'est changée).

Le dispositif de contrôle 100 permet ainsi d'optimiser, sans connaissance a priori des modèles de fluctuation de la production, de la consommation et du prix de l'énergie électrique, le coût à long terme d'un système d'accès radio 1 raccordé au réseau électrique 6 et l'espérance de vie de la batterie 5. Dans un premier temps, ce dispositif de contrôle utilise un processus d'apprentissage pour trouver la stratégie de fonctionnement (de charge et de décharge) optimale.

Une fois l'apprentissage terminé, la matrice des Q-valeurs est utilisée pour déterminer à chaque état l'action optimale à choisir, lors d'une étape E2 de pilotage de la batterie 5.

Le dispositif de contrôle 100 comprend un module d'optimisation 101 destiné à déterminer une stratégie de fonctionnement de la batterie 5 par optimisation d'une fonction objectif qui associe un coût à une stratégie de fonctionnement possible de la batterie pendant une durée déterminée T tout en respectant au moins une contrainte de protection de la batterie contre le vieillissement accéléré et un module de pilotage 102 de la batterie 5 destiné à commander les flux d'énergie électrique entrants et sortants de la batterie 5 en fonction de la stratégie de fonctionnement déterminée. Le module d'optimisation 101 et le module de pilotage 102 sont respectivement destinés à mettre en œuvre l'étape d'optimisation E1 et l'étape de pilotage E2.

Quand un nouveau système d'accès radio est déployé, il peut exploiter les stratégies de fonctionnement des systèmes d'accès radio voisins ayant déjà réalisé le processus d'apprentissage. Un nouveau processus d'apprentissage doit être exécuté uniquement dans le cas de changements notables tels qu'une nouvelle technologie de station de base ou de batterie ou de dispositif de production locale d'énergie électrique, ou encore un changement important au niveau du marché de l'énergie.

Dans une variante de réalisation, la fonction objectif la fonction objectif associe un coût en empreinte carbone (ou plus généralement en empreinte écologique) à une stratégie de fonctionnement de la batterie 5 pendant une durée déterminée T. L'optimisation vise à déterminer la stratégie de fonctionnement optimale de la batterie 5 qui minimise l'empreinte carbone (ou l'empreinte écologique).

## Revendications

1. Procédé de gestion des flux d'énergie électrique au sein d'un système (1) d'accès radio à un réseau de communication comportant un émetteur-récepteur radio (2), un dispositif de raccordement à un réseau électrique (6), un dispositif (4) de production d'énergie électrique et une batterie (5) de stockage d'énergie électrique produite par ledit dispositif de production (4) et d'alimentation électrique de l'émetteur-récepteur radio (2), **caractérisé en ce qu'**un dispositif de contrôle (100) détermine une stratégie de fonctionnement de la batterie (5) par optimisation (E1) d'une fonction objectif (*O*) qui associe un coût à une stratégie de fonctionnement possible de la batterie (5) pendant une période de durée déterminée T et en respectant au moins une contrainte de protection de la batterie (5) contre le vieillissement accéléré et pilote (E2) les flux d'énergie électrique entrants et sortants de la batterie (5) en fonction de la stratégie de fonctionnement déterminée, et **caractérisé en ce qu'**une contrainte de protection de la batterie (5) est de limiter la durée d'inutilisation de la batterie (5) à une durée maximale prédéfinie, et **en ce qu'**on détermine la durée maximale d'inutilisation de la batterie (5) en fonction de la température de la batterie et/ou de l'état de charge courant de la batterie.

2. Procédé selon la revendication 1, **caractérisé en ce qu'**une contrainte de protection de la batterie (5) est d'imposer que l'état de charge de la batterie appartienne à une plage autorisée limitée par une borne inférieure comprise entre 10% et 30%, avantageusement entre 15% et 25%, et une borne supérieure comprise entre 75% et 95%, avantageusement entre 80% et 90%.

3. Procédé selon l'une des revendications précédentes, **caractérisé en ce qu'**une contrainte de protection de la batterie (5) est de fixer un taux maximal de charge ou de décharge de la batterie.

4. Procédé selon la revendication précédente, **caractérisé en ce que** le taux maximal de charge ou de décharge fixé est déterminé en fonction de la température de la batterie.

5. Procédé selon la revendication 3 ou 4, **caractérisé en ce que** le taux maximal de charge ou de décharge fixé est déterminé en fonction de l'état de charge courant de la batterie (5).

6. Procédé selon l'une des revendications précédentes, **caractérisé en ce que** la fonction objectif (*O*) est une fonction qui associe un prix de l'électricité du réseau électrique (6) à une stratégie de fonctionnement possible de la batterie (5) pendant la période de durée déterminée T en intégrant dans le temps, sur la durée déterminée T, le produit

   - d'un prix de l'électricité du réseau électrique applicable pendant une durée élémentaire $\Delta_t$ et
   - de la quantité d'énergie électrique fournie par le réseau électrique au système d'accès radio pendant ladite durée élémentaire $\Delta_t$,

   et **en ce que** le dispositif de contrôle (100) détermine, par optimisation de la fonction objectif, une stratégie de fonctionnement de la batterie (5) qui minimise ledit prix de l'électricité pendant la durée déterminée T.

7. Procédé selon la revendication précédente, **caractérisé en ce que** la quantité d'énergie électrique fournie par le réseau électrique pendant une durée élémentaire $\Delta_t$ est déterminée par une opération mathématique

   • d'addition d'une quantité d'énergie électrique consommée par l'émetteur-récepteur radio pendant la durée élémentaire $\Delta_t$ et d'une quantité d'énergie électrique chargée dans la batterie pendant la durée élémentaire $\Delta_t$, dans le cas où ladite batterie est en charge durant la durée élémentaire $\Delta_t$, et
   • de soustraction d'une quantité d'énergie électrique produite par le dispositif de production d'énergie pendant la durée élémentaire $\Delta_t$ et d'une quantité d'énergie électrique déchargée de la batterie dans le cas où ladite batterie est en décharge durant la durée élémentaire $\Delta_t$.

8. Procédé selon l'une des revendications précédentes, **caractérisé en ce que** la fonction objectif *O* est définie par l'équation

$$O = \sum_{t=0}^{T} P_e(t) \cdot \left[ [P_{BS}(t) + P_{Bat}(SOC(t), SOC(t+1)) - P_{PV}(t)] \times \Delta_t \right],$$

où

   • t et t+1 représentent deux instants successifs séparés par la durée élémentaire $\Delta_t$ ;
   • $P_e(t)$ représente le prix d'achat par un consommateur de l'électricité fournie par le réseau électrique (6) au système d'accès radio (1) à l'instant t ou le prix de vente de l'électricité au réseau électrique par le système d'accès radio (1) ;
   • $P_{PV}(t)$ représente la puissance électrique produite par le dispositif de production (4) à l'instant t ;
   • $P_{BS}(t)$ représente la puissance électrique consommée par l'émetteur-récepteur (2) à l'instant t ;
   • $P_{Bat}((SOC(t), SOC(t+1))$ représente la puissance électrique consommée, si elle est positive, ou produite, si elle est négative, par la batterie (5) à l'instant t ;
   • $SOC(t)$ et $SOC(t+1)$ représentent les états de charge de la batterie (5) aux instants t et t+1 respectivement.

9. Procédé selon l'une des revendications 6 à 8, **caractérisé en ce que** l'optimisation est basée sur des données d'évolution durant la période de durée déterminée T de variables d'état relatives à l'énergie électrique consommée par l'émetteur-récepteur radio, à l'état de charge de la batterie et au prix de l'électricité sur le réseau électrique, qui est prédite à partir de données antérieures d'évolution desdites variables d'état durant une période passée.

10. Procédé selon la revendication précédente, **caractérisé en ce que** l'optimisation utilise une méthode de points intérieurs.

11. Procédé selon l'une des revendications 1 à 7, **caractérisé en ce que** l'optimisation utilise une méthode stochastique mettant en œuvre un mécanisme d'apprentissage.

12. Procédé selon l'une des revendications 1 à 10, **caractérisé en ce que** la fonction objectif associe un coût en empreinte carbone à une stratégie de fonctionnement possible de la batterie pendant une durée déterminée T du système d'accès radio et **en ce que** l'optimisation vise à minimiser ladite empreinte carbone sur la durée T.

13. Dispositif de contrôle pour un système d'accès radio à un réseau de communication comportant un émetteur-récepteur radio (2), un dispositif de raccordement à un réseau électrique (6), un dispositif (4) de production d'énergie électrique et une batterie (5) de stockage d'énergie électrique produite par ledit dispositif de production (4) et d'alimentation électrique de l'émetteur-récepteur radio (2), **caractérisé en ce qu'**il comprend un module d'optimisation (101) destiné à déterminer une stratégie de fonctionnement de la batterie (5) par optimisation (E1) d'une fonction objectif qui associe un coût à une stratégie de fonctionnement possible de la batterie pendant une durée déterminée T tout en respectant au moins une contrainte de protection de la batterie contre le vieillissement et un module de pilotage (102) de la batterie (5) destiné à commander les flux d'énergie électrique entrants et sortants de la batterie (5) en fonction de la stratégie de fonctionnement déterminée, et **caractérisé en ce qu'**une contrainte de protection de la batterie (5) est de limiter la durée d'inutilisation de la batterie (5) à une durée maximale prédéfinie, le dispositif de contrôle étant **caractérisé en outre en ce qu'**il détermine la durée maximale d'inutilisation de la batterie (5) en fonction de la température de la batterie et/ou de l'état de charge courant de la batterie.

14. Système d'accès radio à un réseau de communication comportant un émetteur-récepteur radio (2), un dispositif de raccordement à un réseau électrique (6), un dispositif (4) de production d'énergie électrique, une batterie (5) de stockage d'énergie électrique produite par ledit dispositif de production (4) et d'alimentation électrique de l'émetteur-récepteur radio (2) et un dispositif de contrôle (100) selon la revendication précédente.

**Patentansprüche**

1. Verfahren zur Verwaltung der Flüsse elektrischer Energie innerhalb eines Funkzugangssystems (1) zu einem Kommunikationsnetz, das einen Funksender/-empfänger (2), eine Anschlussvorrichtung an ein Elektrizitätsnetz (6), eine Vorrichtung (4) zur Erzeugung elektrischer Energie und eine Batterie (5) zum Speichern von von der Erzeugungsvorrichtung (4) erzeugter elektrischer Energie und zur Elektrizitätsversorgung des Funksender/- empfängers (2) aufweist, **dadurch gekennzeichnet, dass** eine Kontrollvorrichtung (100) eine Betriebsstrategie der Batterie (5) durch Optimierung (E1) einer Zielfunktion ($O$), die einer möglichen Betriebsstrategie der Batterie (5) während einer Periode bestimmter Dauer T Kosten zuordnet, und unter Beachtung mindestens einer Schutzbeschränkung der Batterie (5) gegen beschleunigtes Altern bestimmt, und die eingehenden und ausgehenden Flüsse elektrischer Energie der Batterie (5) abhängig von der bestimmten Betriebsstrategie steuert (E2), und **dadurch gekennzeichnet, dass** eine Schutzbeschränkung der Batterie (5) ist, die Nichtbenutzungsdauer der Batterie (5) auf eine vordefinierte maximale Dauer zu begrenzen, und dass die maximale Nichtbenutzungsdauer der Batterie (5) abhängig von der Temperatur der Batterie und/oder vom aktuellen Ladezustand der Batterie bestimmt wird.

2. Verfahren nach Anspruch 1, **dadurch gekennzeichnet, dass** eine Schutzbeschränkung der Batterie (5) ist, vorzuschreiben, dass der Ladezustand der Batterie zu einem genehmigten Bereich gehört, der von einer Untergrenze zwischen 10% und 30%, vorteilhafterweise zwischen 15% und 25%, und einer Obergrenze zwischen 75% und 95%, vorteilhafterweise zwischen 80% und 90% begrenzt wird.

3. Verfahren nach einem der vorhergehenden Ansprüche, **dadurch gekennzeichnet, dass** eine Schutzbeschränkung der Batterie (5) ist, eine maximale Lade- oder Entladerate der Batterie festzulegen.

4. Verfahren nach dem vorhergehenden Anspruch, **dadurch gekennzeichnet, dass** die festgelegte maximale Lade- oder Entladerate abhängig von der Temperatur der Batterie bestimmt wird.

5. Verfahren nach Anspruch 3 oder 4, **dadurch gekennzeichnet, dass** die festgelegte maximale Lade- oder Entladerate abhängig vom aktuellen Ladezustand der Batterie (5) bestimmt wird.

6. Verfahren nach einem der vorhergehenden Ansprüche, **dadurch gekennzeichnet, dass** die Zielfunktion ($O$) eine Funktion ist, die einen Preis der Elektrizität des Elektrizitätsnetzes (6) einer möglichen Betriebsstrategie der Batterie (5) während der Periode bestimmter Dauer T zuordnet, indem sie das Produkt

   - eines während einer elementaren Dauer $\Delta_t$ anwendbaren Preises der Elektrizität des Elektrizitätsnetzes und
   - der vom Elektrizitätsnetz während der elementaren Dauer $\Delta_t$ an das Funkzugangssystem gelieferten Menge elektrischer Energie

   zeitlich über die bestimmte Dauer T integriert, und dass die Kontrollvorrichtung (100) durch Optimierung der Zielfunktion eine Betriebsstrategie der Batterie (5) bestimmt, die den Preis der Elektrizität während der bestimmten Dauer T minimiert.

7. Verfahren nach dem vorhergehenden Anspruch, **dadurch gekennzeichnet, dass** die vom Elektrizitätsnetz während einer elementaren Dauer $\Delta_t$ gelieferte Menge elektrischer Energie bestimmt wird durch eine mathematische Operation

• der Addition einer vom Funksender/-empfänger während der elementaren Dauer $\Delta_t$ verbrauchten Menge elektrischer Energie und einer während der elementaren Dauer $\Delta_t$ in die Batterie geladenen Menge elektrischer Energie, in dem Fall, in dem die Batterie während der elementaren Dauer $\Delta_t$ geladen wird, und
• der Subtraktion einer von der Energieerzeugungsvorrichtung während der elementaren Dauer $\Delta_t$ erzeugten Menge elektrischer Energie und einer entladenen Menge elektrischer Energie der Batterie in dem Fall, in dem die Batterie während der elementaren Dauer $\Delta_t$ entladen wird.

8. Verfahren nach einem der vorhergehenden Ansprüche, **dadurch gekennzeichnet, dass** die Zielfunktion **O** definiert wird durch die Gleichung

$$O = \sum_{t=0}^{T} P_e(t) \cdot \left[ \left[ P_{BS}(t) + P_{BAT}\big(SOC(t), SOC(t+1)\big) - P_{PV}(t) \right] \times \Delta_t \right],$$

wobei

• t und t+-1 zwei durch die elementare Dauer $\Delta_t$ getrennte aufeinanderfolgende Zeitpunkte darstellen;
• $P_e(t)$ den Kaufpreis durch einen Verbraucher der vom Elektrizitätsnetz (6) an das Funkzugangssystem (1) zum Zeitpunkt t gelieferten Elektrizität oder den Verkaufspreis der Elektrizität an das Elektrizitätsnetz durch das Funkzugangssystem (1) darstellt;
• $P_{PV}(t)$ die von der Erzeugungsvorrichtung (4) zum Zeitpunkt t erzeugte elektrische Leistung darstellt;
• $P_{BS}(t)$ die vom Sender/Empfänger (2) zum Zeitpunkt t verbrauchte elektrische Leistung darstellt;
• $P_{BAT}((SOC(t), SOC(t+1))$ die von der Batterie (5) zum Zeitpunkt t verbrauchte, wenn sie positiv ist, oder erzeugte, wenn sie negativ ist, elektrische Energie darstellt;
• $SOC(t)$ und $SOC(t+1)$ die Ladezustände der Batterie (5) zu den Zeitpunkten t bzw. t+1 darstellen.

9. Verfahren nach einem der Ansprüche 6 bis 8, **dadurch gekennzeichnet, dass** die Optimierung auf Daten der Entwicklung, während der Periode bestimmter Dauer T, von Zustandsvariablen bezüglich der vom Funksender/-empfänger verbrauchten elektrischen Energie, des Ladezustands der Batterie und des Preises der Elektrizität im Elektrizitätsnetz basiert, die ausgehend von früheren Daten der Entwicklung der Zustandsvariablen während einer vergangenen Periode vorhergesagt wird.

10. Verfahren nach dem vorhergehenden Anspruch, **dadurch gekennzeichnet, dass** die Optimierung ein Innere-Punkte-Verfahren verwendet.

11. Verfahren nach einem der Ansprüche 1 bis 7, **dadurch gekennzeichnet, dass** die Optimierung eine stochastische Methode verwendet, die einen Lernmechanismus anwendet.

12. Verfahren nach einem der Ansprüche.1 bis 10, **dadurch gekennzeichnet, dass** die Zielfunktion $CO_2$-Fußabdruck-Kosten einer möglichen Betriebsstrategie der Batterie während einer bestimmten Dauer T des Funkzugangssystems zuordnet, und dass die Optimierung darauf abzielt, den $CO_2$-Fußabdruck über die Dauer T zu minimieren.

13. Kontrollvorrichtung für ein Funkzugangssystem zu einem Kommunikationsnetz, das einen Funksender/- empfänger (2), eine Anschlussvorrichtung an ein Elektrizitätsnetz (6), eine Vorrichtung (4) zur Erzeugung elektrischer Energie und eine Batterie (5) zum Speichern von von der Erzeugungsvorrichtung (4) erzeugter elektrischer Energie und zur Elektrizitätsversorgung des Funksender/-empfängers (2) aufweist, **dadurch gekennzeichnet, dass** sie ein Optimierungsmodul (101), das dazu bestimmt ist, eine Betriebsstrategie der Batterie (5) durch Optimierung (E1) einer Zielfunktion, die einer möglichen Betriebsstrategie der Batterie während einer bestimmten Dauer T Kosten zuordnet, unter Beachtung mindestens einer Schutzbeschränkung der Batterie gegen Alterung, zu bestimmen, und ein Steuermodul (102) der Batterie (5) enthält, das dazu bestimmt ist, die eingehenden und ausgehenden Flüsse elektrischer Energie der Batterie (5) abhängig von der bestimmten Betriebsstrategie zu steuern, und **dadurch gekennzeichnet, dass** eine Schutzbeschränkung der Batterie (5) ist, die Nichtbenutzungsdauer der Batterie (5) auf eine vordefinierte maximale Dauer zu begrenzen, wobei die Kontrollvorrichtung außerdem **dadurch gekennzeichnet ist, dass** sie die maximale Nichtbenutzungsdauer der Batterie (5) abhängig von der Temperatur der Batterie und/oder dem aktuellen Ladezustand der Batterie bestimmt.

14. Funkzugangssystem zu einem Kommunikationsnetz, das einen Funksender/-empfänger (2), eine Anschlussvor-

**EP 3 240 277 B1**

richtung an ein Elektrizitätsnetz (6), eine Vorrichtung (4) zur Erzeugung elektrischer Energie, eine Batterie (5) zum Speichern von von der Erzeugungsvorrichtung (4) erzeugter elektrischer Energie und zur Elektrizitätsversorgung des Funksender/- empfängers (2) und eine Kontrollvorrichtung (100) nach dem vorhergehenden Anspruch aufweist.

**Claims**

1. Method for managing flows of electrical energy within a radio access system (1) for a communication network including a radio transceiver (2), a device for connecting to an electrical grid (6), an electrical energy production device (4) and a battery (5) for storing electrical energy produced by said production device (4) and for electrically powering the radio transceiver (2), **characterized in that** a control device (100) determines an operating strategy for the battery (5) by optimizing (E1) an objective function (O) that associates a cost with a possible operating strategy for the battery (5) during a period of determined duration T and while respecting at least one constraint for protecting the battery (5) against accelerated ageing, and manages (E2) the incoming and outgoing flows of electrical energy of the battery (5) depending on the determined operating strategy, wherein one constraint for protecting the battery (5) is to restrict the duration of disuse of the battery (5) to a predefined maximum duration and wherein the maximum duration of disuse of the battery (5) is determined depending on the temperature of the battery and/or on the current state of charge of the battery.

2. Method according to Claim 1, **characterized in that** one constraint for protecting the battery (5) is to impose that the state of charge of the battery belongs to a permitted range restricted by a lower bound of between 10% and 30%, advantageously between 15% and 25%, and an upper bound of between 75% and 95%, advantageously between 80% and 90%.

3. Method according to either of the preceding claims, **characterized in that** one constraint for protecting the battery (5) is to set a maximum rate of charge or discharge of the battery.

4. Method according to the preceding claim, **characterized in that** the set maximum rate of charge or discharge is determined depending on the temperature of the battery.

5. Method according to Claim 3 or 4, **characterized in that** the set maximum rate of charge or discharge is determined depending on the current state of charge of the battery (5).

6. Method according to one of the preceding claims, **characterized in that** the objective function (O) is a function that associates a price of electricity of the electrical grid (6) with a possible operating strategy for the battery (5) during the period of determined duration T by integrating over time, over the determined duration T, the product

   - of a price of electricity of the electrical grid that is applicable during an elementary duration $\Delta_t$ and
   - the amount of electrical energy supplied by the electrical grid to the radio access system during said elementary duration $\Delta_t$,

   and **in that** the control device (100) determines, by optimizing the objective function, an operating strategy for the battery (5) that minimizes said price of electricity during the determined duration T.

7. Method according to the preceding claim, **characterized in that** the amount of electrical energy supplied by the electrical grid during an elementary duration $\Delta_t$ is determined by a mathematical operation

   • of adding an amount of electrical energy consumed by the radio transceiver during the elementary duration $\Delta_t$ and an amount of electrical energy charged to the battery during the elementary duration $\Delta_t$, if said battery is charging over the elementary duration $\Delta_t$, and
   • of subtracting an amount of electrical energy produced by the energy production device during the elementary duration $\Delta_t$ and an amount of electrical energy discharged from the battery if said battery is discharging over the elementary duration $\Delta_t$.

8. Method according to one of the preceding claims, **characterized in that** the objective function O is defined by the equation

$$O = \sum_{t=0}^{T} P_e(t) \cdot \left[ [P_{BS}(t) + P_{Bat}(SOC(t), SOC(t+1)) - P_{PV}(t)] \times \Delta_t \right],$$

where

- t and t+1 represent two successive instants separated by the elementary duration $\Delta_t$;
- $P_e(t)$ represents the purchase price for a consumer of electricity supplied by the electrical grid (6) to the radio access system (1) at the instant t, or the sale price of electricity to the electrical grid by the radio access system (1);
- $P_{PV}(t)$ represents the electric power produced by the production device (4) at the instant t;
- $P_{BS}(t)$ represents the electric power consumed by the transceiver (2) at the instant t;
- $P_{Bat}((SOC(t), SOC(t+1))$ represents the electric power consumed, if it is positive, or produced, if it is negative, by the battery (5) at the instant t;
- $SOC(t)$ and $SOC(t+1)$ represent the states of charge of the battery (5) at the instants t and t+1, respectively.

9. Method according to one of Claims 6 to 8, **characterized in that** the optimization is based on data on the evolution, over the period of determined duration T, of state variables relating to the electrical energy consumed by the radio transceiver, to the state of charge of the battery and to the price of electricity on the electrical grid, which is predicted on the basis of previous data on the evolution of said state variables over a past period.

10. Method according to the preceding claim, **characterized in that** the optimization uses an interior point method.

11. Method according to one of Claims 1 to 7, **characterized in that** the optimization uses a stochastic method implementing a learning mechanism.

12. Method according to one of Claims 1 to 10, **characterized in that** the objective function associates a carbon footprint cost with a possible operating strategy for the battery, during a determined duration T, of the radio access system, and **in that** the optimization aims to minimize said carbon footprint over the duration T.

13. Control device for a radio access system for a communication network including a radio transceiver (2), a device for connecting to an electrical grid (6), an electrical energy production device (4) and a battery (5) for storing electrical energy produced by said production device (4) and for electrically powering the radio transceiver (2), **characterized in that** it comprises an optimization module (101) intended to determine an operating strategy for the battery (5) by optimizing (E1) an objective function that associates a cost with a possible operating strategy for the battery during a determined duration T while respecting at least one constraint for protecting the battery against ageing, and a module (102) for managing the battery (5) intended to control the incoming and outgoing flows of electrical energy of the battery (5) depending on the determined operating strategy, wherein one constraint for protecting the battery (5) is to restrict the duration of disuse of the battery (5) to a predefined maximum duration and wherein the control device is determining the maximum duration of disuse of the battery (5) depending on the temperature of the battery and/or on the current state of charge of the battery.

14. Radio access system for a communication network including a radio transceiver (2), a device for connecting to an electrical grid (6), an electrical energy production device (4), a battery (5) for storing electrical energy produced by said production device (4) and for electrically powering the radio transceiver (2), and a control device (100) according to the preceding claim.

**Figure 1**

**Figure 2**

**Figure 3**

**Figure 4**

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009319090 A1
- WO 2015107299 A1
- WO 2015031581 A
- WO 2016013089 A
- US 2017186108 A

**Littérature non-brevet citée dans la description**

- **J. LEITHON** ; **S. SUN** ; **T. J. LIM**. Energy Management Strategies for Base Stations Powered by the Smart Grid. *IEEE GLOBECOM*, 2013
- **D. NIYATO** ; **X. LU** ; **P. WANG**. Adaptive Power Management for Wireless Base Stations in a Smart Grid Environment. *IEEE Wireless Communications*, 2012, vol. 19 (6), 44-51
- **R. KAEWPUANG** ; **D. NIYATO** ; **P. WANG**. Decomposition of Stochastic Power Management for Wireless Base Station in Smart Grid. *IEEE Wireless Communications Letters*, 2012, vol. 1 (2), 97-100
- **J. LEITHON** ; **T. J. LIM** ; **S. SUN**. Online Energy Management Strategies for Base Stations Powered by the Smart Grid. *IEEE SmartGridComm*, 2013, 199-204